# FASCICULE DE BREVET EUROPEEN

(11) **EP 4 118 952 B1**
(45) Date de publication et mention de la délivrance du brevet: **30.10.2024**
(21) Numéro de dépôt: 21186155.4
(22) Date de dépôt: 16.07.2021
(51) Int. Cl.: A01G 9/24, A01G 9/14

(54) **SYSTÈME DE CULTURE AUTONOME**
AUTONOMES KULTURSYSTEM
AUTONOMOUS CROP-GROWING SYSTEM

(43) Date de publication de la demande: 18.01.2023
(73) Titulaire: Easy Technic SA, 1630 Bulle (CH)
(72) Inventeur: Guillet, Laurent, 1628 Vuadens (CH)
(74) Mandataire: P&TS SA (AG, Ltd.)

(56) Documents cités:
- WO-A1-2017/134913
- WO-A1-2020/208542
- KR-B1- 102 137 355

## Description

### Domaine technique

La présente invention concerne un système de culture autonome permettant de limiter ou d'éviter les apports en eau et de limiter la consommation énergétique liée aux apports en eau. La présente invention concerne également un moyen et une méthode de gestion de l'eau nécessaire aux cultures.

### Etat de la technique

Les serres sont utilisées depuis longtemps pour faciliter les cultures, notamment en préservant les plantes des intempéries et en maintenant une température et une hygrométrie propices à leur développement. Les serres traditionnelles nécessitent cependant d'approvisionner les cultures en eau. L'accroissement des cultures et les changements climatiques nécessitent cependant de limiter la consommation d'eau. En outre, certaines régions s'appauvrissent en ressources aquifères, ce qui nécessitent des investissements couteux pour le puisage et l'acheminement de l'eau indispensable aux cultures, alors que d'autres régions, déjà arides et naturellement peu propices à l'agriculture, nécessitent de produire localement les cultures nécessaires au développement ou à la survie des populations.

Il importe donc de développer des moyens de culture moins consommateurs d'eau. Il importe en outre de développer des moyens de cultures dont les apports en eau sont les moins coûteux possibles. Le document WO 2020/208542 A1 divulgue par exemple un système de culture comprenant une paroi extérieure, avec une zone de captage permettant de capter l'air extérieur, une zone de condensation permettant de refroidir l'air capté et d'en condenser l'humidité à l'aide d'un réservoir d'eau froide refroidie par une pompe à chaleur de type eau/eau, une zone de collecte permettant de collecter l'eau de condensation, et une zone de culture. Ce système de culture est adapté pour les environnements arides.

Une autre limite de l'agriculture est la pollution des sols, notamment par des engrais ou des produits chimiques, qui se dispersent dans l'environnement avec les eaux de ruissellement ou d'infiltration. Il apparaît nécessaire de limiter, voir d'éviter, la dispersion dans l'environnement de l'eau liquide ayant été utilisée pour l'agriculture.

### Bref résumé de l'invention

Un but de la présente invention est de proposer un système de culture permettant de remédier aux problèmes précités. L'objet de la présente invention est notamment de proposer un système de culture permettant de limiter ou d'éviter les apports en eau liquide nécessaires au développement des plantes.

Un autre but de la présente invention est de proposer un système de culture dont la consommation énergétique est amoindrie, notamment pour ce qui concerne l'approvisionnement en eau.

Un autre but de l'invention est de proposer un système de culture permettant de limiter ou d'éviter la pollution des sols par les produits utilisés dans l'agriculture.

Un autre but de la présente invention est de proposer un moyen et une méthode de gestion de l'eau nécessaire à l'agriculture, qui soit peu coûteuse et facile à mettre en oeuvre, y compris dans des zones climatiques peu propices à l'agriculture, notamment dans des zones arides ou semi-désertiques.

Selon l'invention, ces buts sont atteints notamment au moyen du système de culture autonome et de la méthode objets des revendications indépendantes et détaillés dans les revendications qui en dépendent. En l'occurrence, le système de culture autonome selon la présente invention permet de collecter et de concentrer au sein du système de culture l'humidité de l'air extérieur au système. Il permet en outre de maintenir l'eau au sein du système de culture dans un circuit fermé, en condensant la vapeur d'eau issue de l'évapotranspiration et en recueillant l'eau liquide qui en résulte.

Cette solution présente notamment l'avantage par rapport à l'art antérieur de limiter les apports en eau liquide et l'énergie nécessaire aux apports en eau. Elle présente également l'avantage de limiter ou éviter les déperditions en eau et les éventuelles pollutions qui en résultent.

### Brève description des figures

Des exemples de mise en oeuvre de l'invention sont indiqués dans la description illustrée par les figures suivantes :
- Figure 1 : Vue d'ensemble schématique du système de culture autonome selon la présente invention ;
- Figure 2 : Détails du dispositif de condensation selon un exemple de la présente invention ;
- Figure 3 : Détails du dispositif de condensation selon un exemple de la présente invention ;

### Exemple(s) de mode de réalisation de l'invention

Le système de culture autonome **1** selon la présente description comporte un espace de culture **30** délimité latéralement par des parois latérales **10** et au-dessus par un dispositif de condensation **300**. L'espace de culture **30** permet aux plantes cultivées **P** de croitre dans les meilleures conditions de température et d'humidité. Les plantes cultivées **P** sont disposées sur un support de culture **31** permettant leur enracinement. Le support de culture **31** comprend à cet effet un substrat de culture adapté tel que de la terre, ou un mélange de terre et d'humus ou un substrat sec à base de billes d'argile ou tout autre substrat adapté aux plantes cultivées. Le support de culture **31** comprend en partie inférieure une couche imperméable **32** permettant de retenir l'eau dans un réservoir **34** à proximité des racines des plantes cultivées **P**. Le support de culture **31** comporte au-dessus de l'eau du réservoir **34**, retenue par la couche imperméable inférieure **32**, un dispositif de suspension **33** du substrat sur lequel repose le substrat de culture. Le dispositif de suspension **33** permet ainsi de maintenir le substrat de culture au-dessus de l'eau du réservoir **34**. Le dispositif de suspension **33** est poreux, de telle manière que l'eau qui s'infiltre dans le substrat par gravité puisse s'écouler dans la partie inférieure et alimenter le réservoir d'eau **34**. Selon un mode de réalisation la porosité du dispositif de suspension **33** permet en outre le passage des racines des plantes cultivées **P**, qui peuvent ainsi puiser l'eau directement dans le réservoir **34**. Selon un autre mode de réalisation, le dispositif de suspension **33** ne permet que le passage de l'eau et non le passage des racines des plantes cultivées **P**. le substrat est alors humidifié à partir du réservoir **34** par un système d'irrigation, ou par un système de capillaires qui permettent de maintenir le degré d'humidité du substrat à une valeur optimale.

Le dispositif de suspension **33** peut prendre la forme d'une tôle performée, d'un treillage, d'un textile poreux ou tout autre dispositif susceptible de retenir le substrat tout en laisser s'écouler l'eau dans le réservoir **34** sous-jacent.

La couche imperméable **32** peut être par exemple une bâche en matière synthétique, une couche cimentée ou tout autre matière propre à retenir l'eau et à éviter son infiltration dans le sol si le support de culture est au sol.

Le support de culture **34** peut être disposé au sol. Alternativement ou en plus, le support de culture peut être surélevé sur un ou plusieurs niveaux au sein de l'espace de culture **30**. Quel que soit l'arrangement, il importe que l'eau du réservoir **34** soit disponible sans pompage mécanique pour les cultures, ou avec un pompage minimal, c'est-à-dire limité à l'acheminement de l'eau du réservoir **34** jusqu'au substrat de culture disposé juste au-dessus, à une distance inférieure à quelques centimètres. Cela permet de limiter les dépenses énergétiques et de simplifier le système global. Selon une disposition particulière, le système de culture autonome **1** comporte un réservoir **34** unique en position basse, au niveau du sol ou à proximité. Dans ce cas, l'eau du réservoir 34 peut être acheminée à des plantations surélevées disposées dans des supports de culture dénués de réservoirs. De préférence chaque niveau de culture du système de culture autonome **1**, le cas échéant, comporte son propre réservoir d'eau **34**.

L'eau du réservoir **34** provient essentiellement, voire exclusivement, de l'humidité de l'air ambiant **AA**, condensée par le dispositif de condensation **300**, disposé au-dessus de l'espace de culture **30**. L'air ambiant **AA** correspond à l'air de l'espace de culture **30**. Son degré d'humidité est relativement élevé du fait de l'évapotranspiration des plantes cultivées **P**. L'hygrométrie de l'espace de culture **30** peut être comprise par exemple entre 40% et 90% voire 95% ou plus. Elle peut être en l'occurrence comprise entre 50% et 80%. L'hygrométrie de l'espace de culture **30** est alors bien plus élevée que celle de l'air extérieur **AE** au système **1**. L'hygrométrie de l'espace de culture **30** peut être par exemple le double, voire le triple, de l'hygrométrie extérieure, notamment dans les régions arides.

Il importe que l'humidité de l'air ambiant **AA** reste dans l'espace de culture **30** et ne se perde pas vers l'extérieur du système de culture autonome **1**. Pour se faire, les parois latérales **10** sont de préférence imperméables à l'air. L'humidité présente dans l'air ambiant **AA** suit un cycle fermé passant de l'état liquide au niveau du réservoir **34** à l'état de vapeur dans l'espace de culture **30** puis à l'état liquide au niveau du dispositif de condensation **300**.

Le système **1** permet en outre de collecter l'humidité de l'air extérieur **AE** et de la concentrer au sein du système de culture autonome **1**. L'air extérieur **AE** peut être collecté au niveau d'une ou plusieurs des parois latérales **10** par une ou plusieurs entrées d'air **100**. Notons que la ou les entrées d'air **100** permettent un flux d'air **AC** depuis l'extérieur du système de culture autonome 1 vers l'intérieur. De préférence, la ou les entrées d'air **100** interdisent les flux d'air sortant, depuis l'intérieur du système **1** vers l'extérieur, de sorte à préserver l'hygrométrie de l'espace de culture **30**.

L'air extérieur AE peut alors être capté par un ventilateur ou tout système d'aspiration adapté. La température de l'air capté AC dépend de l'environnement extérieur, de la période diurne ou nocturne et de la saison. Dans les environnements arides, semi-désertiques, ou désertiques, la température de l'air capté peut être supérieure à 40°C, voire supérieure à 50°C, ou au-delà, notamment en période diurne. Dans des environnements tempérés, ou dans des périodes nocturnes, la température de l'air capté AC peut être comprise entre environ 10°C et environ 35°C.

En fonction de sa température et/ou de son hygrométrie, l'air capté, ou une partie de l'air capté depuis l'extérieur peut être directement orienté vers les plantes **P** dans l'espace de culture **30**. Cela peut être le cas lorsque la température est comprise entre environ 15°C et environ 25°C. Dans le cas où la température de l'air capté **AC** est supérieure à une valeur prédéterminée, telle que 25°, ou 20°C, il peut être dirigé vers la partie haute du système de culture autonome **1** pour y être rafraîchi à une température acceptable pour les plantes **P**, avant d'être dispersé dans l'espace de culture **30**. L'air capté **AC** peut être acheminé dans la partie haute du système via une ou plusieurs conduites adaptées **210**. Les fractions relatives d'air collecté **AC** qui sont orientées directement sur les cultures, et d'air collecté **AC** qui sont refroidies, peuvent être modulées en fonction des besoins. La partie basse du système de culture autonome **1**, où sont les plantes cultivées **P**, est par conséquent maintenue à une température constante, ou approximativement constante et adaptée à la croissance des plantes **P**. Il est à noter que les parois latérales **10** peuvent être vitrées ou partiellement vitrées, de sorte que les rayonnements lumineux parviennent dans l'espace de culture **30** et participent à la température ambiante. De préférence, la partie basse de l'espace de culture **30** est maintenue à une température comprise entre environ 20°C et environ 35°C en fonction de variétés cultivées.

L'air capté **AC** peut être dispersé à proximité des plantations par une ou plusieurs bouches d'aération **220**. L'air capté **AC** peut notamment être acheminé jusqu'au-dessus des plantations **P**, et distribué dans l'espace de culture **30** à une hauteur de l'ordre de quelques centimètres ou de quelques dizaines de centimètres ou inférieure à environ un mètre, de sorte que l'air capté, s'il est plus chaud que l'air ambiant **AA**, soit effectivement dirigé vers les plantations **P** avant de monter dans la partie haute du système de culture autonome **1**.

L'air capté **AC**, ou une fraction de l'air capté peut être utilisé dans des échanges thermiques à travers une pompe à chaleur air-air **200**. Selon une disposition particulière, l'air capté **AC** peut être réchauffé avant d'être dispersé dans l'espace de culture **30** si sa température est inférieure à un seuil prédéterminé, de sorte à ne pas refroidir outre mesure l'espace de culture **30**. La pompe à chaleur **100** peut être utilisée à cette fin.

L'air capté **AC** peut être refroidit par la pompe à chaleur **200** ou permettre le refroidissement d'un flux d'air interne destiné à alimenter le dispositif de condensation **300**. Le flux d'air froid **AF** produit par la pompe à chaleur **200** est acheminé jusqu'au dispositif de condensation **300** surplombant l'espace de culture **30** dans la partie haute du système de culture autonome **1**. L'humidité de l'air ambiant **AA** se condense au contact du dispositif de condensation **300**, refroidi par le flux d'air froids **AF**, ce qui produit de l'eau liquide qui arrose en continu les plantes **P** et qui alimente le réservoir sous-jacent **34** après avoir traversé le substrat de culture. L'air froid **AF** est refroidi en fonction de l'hygrométrie et/ou de la température de l'air ambiant **AA** à une température apte à provoquer la condensation au niveau du dispositif de condensation **300**. L'air froid **AF** est par exemple refroidi à une température correspondant au point de rosée ou à une température inférieure au point de rosée, lequel est déterminé en fonction de la température et de l'hygrométrie de l'air ambiant **AA**. L'air froid AF peut être par exemple refroidi à une température inférieure à 10°C, ou 5°C ou inférieure à 0°C.

L'eau, une fois réaccueillie dans le réservoir **34**, participe au cycle interne du système de culture autonome **1**, en alimentant les plantes **P**, étant ensuite remise sous forme de vapeur dans l'espace de culture **30** par l'évapotranspiration des plantes, puis subissant la condensation de l'air ambiant **AA** au contact du dispositif de condensation **300**.

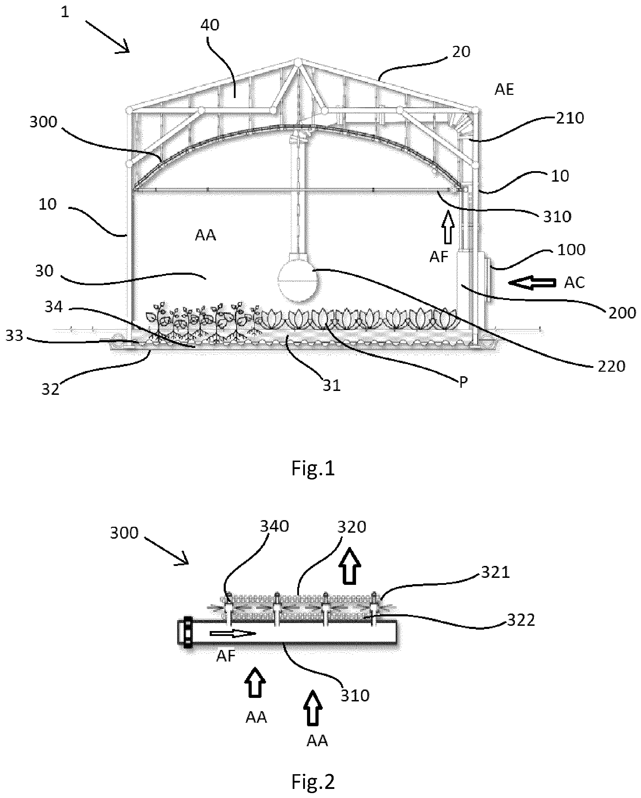

Le dispositif de condensation **300** est décrit plus en détail dans la figure 2. Il comprend notamment un système d'alimentation **330** en air froid AF provenant de la pompe à chaleur **200**. Le système d'alimentation **330** alimente plusieurs injecteurs **340** permettant d'expulser l'air froid **AF** au contact de l'air ambiant **AA**. Le dispositif de condensation **300** comporte en outre un promoteur de condensation **320** permettant de capter la condensation de la vapeur d'eau présente dans l'air ambiant **AA** au contact de l'air froid **AF**. Le promoteur de condensation **320** comporte à cet effet au moins une surface **321** refroidie par les injecteurs **340**, et dont le relief favorise le captage de l'humidité ambiante sous forme d'eau liquide. La surface **321** est de préférence perméable à l'air, de sorte que l'air ambiant **AA** puisse passer au travers. Elle peut prendre la forme d'un fin treillage ayant une importante surface de contact avec l'air ambiant **AA**. La surface **321** reste cependant de préférence suffisamment ajourée pour permettre le passage d'une portion substantielle de la lumière naturelle dans l'espace de culture **30**. Un compromis peut être trouvé entre la densité du treillage de la surface **321** et sa transparence à la lumière.

Le rôle de la surface **321** se limite de préférence à la nucléation de la rosée produite par les basses températures de l'air froid **AF** émis par les injecteur **340**. La surface **321** peut alors être constituée d'un matériau léger tels qu'un polymère synthétique. Elle peut alternativement prendre la forme d'un fin grillage métallique. La surface 321 peut être disposée sur des supports adaptés. Elle est de préférence disposée de sorte à couvrir l'espace de culture **30**, pour permettre un contact maximal avec l'air ambiant **AA**. En d'autres termes, la surface **321** s'étend de préférence d'une paroi latérale **10** à la paroi latérale **10** opposée. Elle peut par exemple occuper l'intégralité de la surface du système de culture autonome **1** au-dessus de l'espace de culture **30**. Alternativement, elle peut occuper une ou plusieurs portions de la surface disponible au-dessus de l'espace de culture **30**, de sorte à ménager suffisamment d'éclairage par la lumière naturelle.

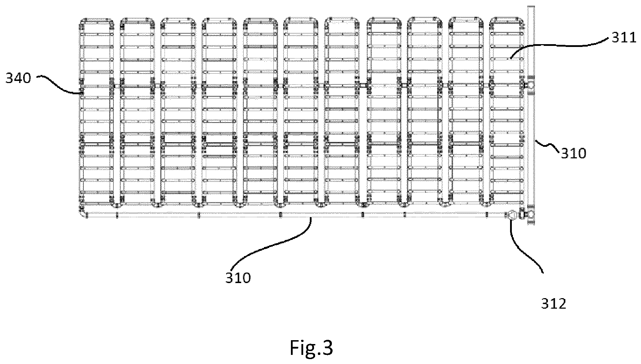

La figure 3 représente un exemple d'architecture du système d'alimentation **330** en air froid **AF** du dispositif de condensation. Le système d'alimentation **330** comporte notamment au moins une conduite principale **310** permettant d'acheminer l'air froid **AF** depuis la pompe à chaleur **200** vers le dispositif de condensation **300** et de reconduire l'air réchauffé par l'air ambiant **AA** vers la pompe à chaleur **200**. La ou les conduites principales peuvent être ramifiée de sorte à alimenter plusieurs sections du dispositif de condensation **300**. Une ou plusieurs des conduites principales **310** peuvent en outre comporter des vannes **312** permettant de permettre ou d'interdire le passage du flux d'air froid **AF** au moins sur certaines sections. Les vannes **312**, ou au moins certaines d'entre elles, peuvent en outre prendre des positions intermédiaires de sorte à réguler le débit d'air froid AF dispensé vers le dispositif de condensation **300**. L'une ou plusieurs des vannes **312** peuvent être actionnées manuellement ou bien automatiquement en fonction de paramètres prédéterminés tels que la température et/ou l'hygrométrie de l'air ambiant **AA**, la saison, le moment de la journée ou le degré d'ensoleillement.

La ou les conduits principales **310** alimentent en air froid **AF** une ou plusieurs conduites secondaires **311**, comportant chacune plusieurs injecteurs **340**. Les injecteurs **340** sont disposés suffisamment proches les uns des autres pour permettre un refroidissement homogène de l'air ambiant **AA**. En fonction de la pression de l'air froid **AF** expulsé, les injecteurs **340** peuvent être à une distance les uns des autres comprises entre quelques centimètres et plusieurs dizaines de centimètres.

Les injecteurs **340** peuvent être unidirectionnels, c'est-à-dire adaptés à la projection de l'air froid **AF** dans une direction unique prédéterminée. Alternativement, ils peuvent être pluridirectionnels, permettant d'éjecter l'air froid **AF** dans au moins deux directions différentes. Dans tous les cas, les injecteurs **340** sont de préférence configurés pour expulser l'air froid **AF** dans une direction horizontale ou substantiellement horizontale de sorte à intercepter l'air ambiant **AA** traversant la surface **321**. Autrement dit, les flux d'air froid **AF** expulsés par les injecteurs **340** sont alignés avec, ou parallèles à la surface **321** ou aux surfaces **321** dans le cas où plusieurs sont présentes.

La ou les conduites secondaires **311** étant elles-mêmes refroidies par les flux d'air froid **AF**, participent à la collecte de la condensation. A leur contact, l'humidité de l'air ambiant **AA** se condense sur leur surface. Pour une meilleure performance de l'ensemble, la ou les conduites secondaires **311** peuvent être disposées en réseaux ou en serpentins de sorte à assurer une surface de contact avec l'air ambiant suffisante, et à permettre une concentration des injecteurs **340** adaptée à la condensation d'un maximum d'air ambiant **AA**.

Selon une mode de réalisation privilégié, le dispositif de condensation **300** comporte une première surface de condensation **321** et une seconde surface de condensation **322** superposées l'une à l'autre de sorte à augmenter la surface de condensation de l'air ambiant **AA**. De préférence, les deux surfaces de condensation **321**, **322** sont disposées de sorte que l'air froid soit expulsé par les injecteurs **340** dans l'espace séparant les deux surfaces de condensation **321**, **322**. Le dispositif de condensation **300** est ainsi arrangé de sorte qu'une première surface de condensation **321** soit disposées au-dessus des injecteurs **340** et une seconde surface de condensation **322** soit disposées en-dessous des injecteurs **340**. La face des surfaces **321** et **322** opposée aux injecteurs **340** permet ainsi de condenser l'humidité de l'air ambiant **AA**.

L'air froid **AF** peut être acheminé dans les conduites principales **310** et secondaire **311** à une pression supérieure à 2 bars, ou supérieure à 3 bars. De préférence la pression de l'air froid **AF** au niveau des injecteurs est comprise entre 5 et 15 bars, voire entre environ 5 et environ 10 bars. Le rapport des sections des conduites principales **310** et des conduites secondaires **311** correspondantes peut être adapté de sorte à augmenter la pression du flux d'air froid AF dans les conduites secondaires **311** par rapport à celle des conduites principales **310**. A cet effet, la sommes des sections des conduites secondaires **311** reste inférieure à la somme des sections des conduites principales correspondantes.

Le dispositif de condensation **300** peut s'étendre par exemple de façon horizontale au-dessus de l'espace de culture **30**. Alternativement, le dispositif de condensation **300** possède une forme tridimensionnelle permettant d'augmenter la surface de contact avec l'air ambiant **AA**. Une telle forme tridimensionnelle peut être par exemple une forme semi-circulaire convexe ou concave telle que représentés à la figure 1. D'autre dispositions telle qu'un arrangement en zig-zag, comportant plusieurs surface orientées angulairement les unes aux autres, peuvent être envisagés.

Les conduites secondaires **311** du dispositif de condensation **300** offrent de préférence une flexibilité suffisante pour permettre de telles dispositions tridimensionnelles. Elles peuvent être faite par exemple en matériau polymère souple ou semi-rigide. Les conduites principales **310** peuvent également être constituées de matériaux souples ou bien rester rigides.

L'espace d'échange **40** situé au-dessus du dispositif de condensation **300** permet les échanges d'air entre l'espace de culture **30** et l'environnement extérieur sans perte d'humidité de l'air ambiant **AA**. La surface supérieure **20** du système de culture autonome **1** peut être à cet effet perméable à l'air extérieur AE ou partiellement perméable à l'air extérieur **AE**. Des ouvertures peuvent être ménagées à cet effet, lesquelles peuvent être non occultables ou au contraire modulables entre une position totalement fermée et une position totalement ouverte. De la sorte l'air capté **AC** au niveau de l'espace de culture **30** peut librement s'échapper par l'espace d'échange **40** après que son humidité ou une partie de son humidité est condensées par le dispositif de condensation **300**. Cela évite de produire une surpression dans l'espace de culture **30** par le captage de l'air extérieur. Cela permet en outre un flux d'air naturel de l'air ambiant **AA** vers le dispositif de condensation **300**. L'espace d'échange **40** et les ouvertures de la paroi supérieure **20** peuvent être configurés pour ne permettre qu'un flux sortant d'air, compensant par exemple le flux entrant d'air capté **AC** au niveau de l'espace de culture **30**. A cette fin, un dispositif actif tel qu'un ventilateur peut être prévu, permettant d'extraire l'air interne vers l'espace extérieur. Dans ce cas, le flux d'air ambiant **AA** peut être contrôlé grâce au flux d'air capté **AC** et au flux d'air extrait activement par les ouvertures de la paroi supérieure **20**. Le flux d'air ambiant **AA** peut ainsi être ralenti ou accéléré en fonction de paramètres prédéterminés tels que la température et l'hygrométrie de l'air externe **AE**, la température et l'hygrométrie de l'air ambiant **AA**, la température et la pression de l'air froid **AF**.

Alternativement ou en plus, l'espace d'échange **40** peut être configuré pour permettre une libre circulation de l'air extérieur **AE** au-dessus du dispositif de condensation **300**. De la sorte, l'humidité de l'air extérieur **AE** peut être captée grâce au dispositif de condensation **300** sans pour autant collecter l'air au sein de l'espace de culture **30**.

Le système de culture autonome **1** comporte en outre avantageusement un dispositif de production d'énergie renouvelable (non représenté. Un tel dispositif peut être par exemple une série de panneaux solaires disposés sur la paroi supérieure **20** ou à proximité. Alternativement ou en plus, une ou plusieurs éoliennes peuvent être disposées à proximité.

Le système de culture autonome **1** ici décrit permet ainsi de produire et maintenir un espace de culture en minimisant les consommations d'eau. En particulier, les cultures ne nécessitent pas de captage de l'eau dans le sous-sol ni d'installations souterraines, telles que des dispositifs d'échanges géothermiques. Cependant de tels dispositifs d'échanges géothermiques peuvent être ajoutés aux éléments décrits ci-dessous.

Selon une disposition particulière, le système de culture autonome **1** est modulaire. Par exemple, le dispositif de condensation **300** peut prendre la forme de plusieurs modules pouvant être assemblés ou juxtaposés en fonction des dimensions du système. Par exemple deux ou plus de deux dispositifs de condensation **300** peuvent être superposés les uns aux autres de sorte à augmenter la condensation de l'air ambiant **AA**. Les parois latérales **10** et supérieure **20** peuvent également être adaptées à un montage modulaire du système de culture autonome **1**. Les dimensions peuvent ainsi être facilement adaptées aux besoins. La hauteur des parois latérales **10** peut par exemple être adaptable. Des arceaux ou des poutres préfabriquées et pouvant être facilement assemblés peuvent être prévus pour le maintien des parois latérales **10** et supérieure **20**. Alternativement, le système de culture autonome **1** peut être présenté sous la forme d'un module complet, comprenant l'ensemble des éléments décrits ci-dessus, notamment une ou plusieurs pompes à chaleur air-air, au moins un dispositif de condensation **300**, un espace de culture **30** comportant au moins un support de culture tel que décrit ici. Plusieurs modules peuvent être juxtaposés ou assemblés en fonction des besoins. Ainsi, le système de culture autonome **1** peut être facilement implémenté à moindre coût, y compris dans des zones géographie peu accessibles.

Le système de culture autonome **1** permet ainsi de cultiver des plantes avec un apport d'eau minimum ou nul. En l'occurrence, l'eau nécessaire à la culture des plantes **P** reste en circuit fermé du fait de l'étanchéité des parois latérales **10** et de la présence du dispositif de condensation **300**. Une gestion adaptée des flux d'air capté **AC** et des flux d'air froid **AF** en fonction de l'hygrométrie et de la température de l'air extérieur **AE** permet de maintenir l'hygrométrie au sein de l'espace de culture à une valeur constante, ou de limiter l'asséchement de l'air ambiant **AA**.

En outre, le système de culture autonome **1** selon la présente invention permet de produire de l'eau à partir de la condensation de l'air extérieur **AE**, soit directement lors de son passage dans l'espace d'échange **40**, soit après avoir été capté dans l'espace de culture **30** par les entrées d'air **100**. La production d'eau permet avantageusement de compenser d'éventuelles pertes par évaporation, ce qui peut être le cas dans les environnement très secs et/ou très chauds. En fonction des conditions environnementales, le système de culture autonome **1** selon la présente description permet en outre d'accumuler l'eau produite par la condensation de l'air extérieur **AE** et d'augmenter la proportion d'eau liquide dans le réservoir **34**. L'eau excédentaire peut alors être utilisée à d'autres fins que la culture. Des conduites peuvent par exemple être aménagées pour collecter l'eau du réservoir **34** et l'acheminer vers d'autres lieux, où elle peut être utilisée à des fins domestiques, à des fins de production industrielle, ou pour d'autres cultures.

Le système de culture autonome **1** selon la présente description permet en outre de moduler les proportions d'eau liquide présente dans le réservoir **34** et de la vapeur d'eau présente dans l'air ambiant **AA**. Par exemple, la température de l'espace de culture **30** peut être maintenue inférieure à un certain seuil de sorte à limiter la quantité de vapeur d'eau et favoriser la production liquide. Alternativement ou en plus, la température de l'air froid **AF** peut être abaissée significativement au-dessous du point de rosée pour augmenter la condensation et ainsi favoriser la production d'eau liquide. L'hygrométrie de l'air ambiant **AA** peut au contraire être augmentée en élevant la température de l'espace de culture **30**. La température de l'espace de culture **30** peut être élevée par exemple par un afflux d'air capté **AC** chaud et/ou par l'augmentation des surfaces transparentes à la lumière. A cet effet les parois latérales **10** et supérieure **20** peuvent être transparentes ou en partie transparentes et pourvues d'écrans occultants permettant de limiter le rayonnement lumineux au sein de l'espace de culture **30**.

Le système de culture autonome **1** peut comprendre un ou plusieurs dispositifs de mesure, notamment sélectionnés parmi un thermomètre et un hygromètre, permettant de suivre les conditions environnementales au sein de l'espace de culture **30**, à l'extérieur et/ou dans l'espace d'échange **40**. En fonction des données collectées, les flux d'air capté **AC**, d'air froid, **AF** ainsi que le degré de luminosité peuvent être modulés automatiquement en temps réel, ou manuellement. Le système de culture autonome **1** peut comporter une unité de contrôle permettant de piloter les flux d'air et l'ensoleillement en fonction de paramètres préétablis.

En fonction de la température cible à atteindre dans l'espace de culture **30**, l'air capté **AC** peut être directement dirigé vers les plantes **P**, ou bien détourné vers le dispositif de condensation **300** pour y être refroidi au préalable, ou bien réchauffé au préalable par la pompe à chaleur **200**. Il est précisé que la pompe à chaleur **200** est de préférence réversible. Alternativement, plusieurs pompes à chaleurs peuvent être prévues en fonction des besoins. Dans le cas où l'air capté **AC** est refroidi par le dispositif de condensation **300**, une partie des conduites d'alimentation principale **310** ou des conduites secondaires **320**, en air froid **AF** peuvent être dédiées au rafraichissement du flux d'air capté passant dans une conduite **210**.

La gestion des flux d'air et/ou de l'ensoleillement au sein du système de culture autonome **1**, permet par exemple de maintenir une différence de température adéquate entre l'air ambiant **AA** et le dispositif de condensation **300** de sorte à créer un microclimat.

La présente invention permet de limiter la consommation d'eau, voir de produire de l'eau, au moyen d'un système de culture autonome. Elle permet eu outre de limiter les dépenses énergétiques lis à l'approvisionnement en eau.

La présente invention permet en outre de limiter la pollution des eaux naturelle en maintenant en circuit fermé l'eau nécessaire à la culture. Les éventuels engrais et additifs ajoutés aux cultures ne sont pas alors pas dispersés dans l'environnement avec l'eau des cultures.

La présente invention couvre également une méthode de gestion de l'eau destinée à la culture au moyen du système de culture autonome **1** décrit ici. En l'occurrence, la méthode comporte la mise en place d'un espace de culture **30** dans lequel l'eau utilisée à la culture est maintenue en circuit fermé en partie sous forme liquide et en partie sous forme gazeuse. La méthode comporte une étape de condensation d'une partie variable de l'humidité de l'air ambiant **AA** au sein de l'espace de culture **30**, au moyen d'un dispositif de condensation **300**. La méthode comporte en outre une étape de collecte de l'air extérieur tout en limitant ou en interdisant les flux d'air humide vers l'extérieur. La méthode comporte en outre une étape de condensation de l'air extérieur sans capter l'air au sein de l'espace de culture **30**.

### Numéros de référence employés sur les figures

- 1: Système de culture autonome
- 10: Parois latérales
- 20: Paroi supérieure
- 30: Espace de culture
- 40: Espace d'échange
- 31: Support de culture
- 32: Surface étanche inférieure
- 33: Dispositif de suspension
- 34: Réservoir
- 100: Arrivée d'air
- 200: Pompe à chaleur
- 210: Conduite d'air capté
- 220: Bouche d'aération
- 300: Dispositif de condensation
- 310: Conduite principale
- 311: Conduite secondaire
- 312: Vanne
- 340: Injecteur

## Revendications

1. Système de culture autonome (1) comprenant des parois latérales (10) et supérieures (20) et :
- un espace de culture (30) comprenant au moins un support de culture (31) adapté à la culture de plantations (P) et délimité par l'ensemble de parois latérales (10), et comprenant un air ambiant (AA) de température et d'hygrométrie adaptées à la croissance des plantations (P);
- une ou plusieurs entrées d'air disposées au niveau des parois latérales (10) et permettant de capter l'air extérieur (AE) pour produire un flux d'air capté (AC) entrant;
- un dispositif de condensation (300) disposé au-dessus de l'espace de culture (30) dans lequel circule un flux d'air froid (AF); et
- une pompe à chaleur air-air (200) permettant de produire le flux d'air froid (AF) à partir du flux d'air capté (AC) ;
dans lequel ledit support de culture (31) comporte un réservoir d'eau (34), où l'humidité de l'air ambiant (AA) est condensée au contact du dispositif de condensation (300) et où les parois latérales (10) sont hermétiques à l'air de sorte à maintenir l'humidité de l'air ambiant (AA) au sein de l'espace de culture.

2. Système selon la revendication 1, ledit système de condensation (300) comprenant un système d'alimentation (330) en air froid (AF) provenant de ladite pompe à chaleur (200), une pluralité d'injecteurs (340) permettant d'expulser l'air froid (AF) au contact de l'air ambiant (AA), et un promoteur de condensation (320) sur lequel l'humidité de l'air ambiant (AA) peut se condenser.

3. Système selon la revendication 2, le promoteur de condensation (320) comprenant au moins une surface de condensation (321) disposée à proximité des injecteurs (340), de préférence deux surfaces de condensation (321, 322) superposées de part et d'autre des injecteurs (340), et s'étendant entre deux parois latérales (10) opposées.

4. Système selon l'une des revendications 1 à 3, ledit dispositif de condensation (300) étant perméable à l'air et à la lumière.

5. Système selon l'une des revendications 1 à 4, ledit dispositif de condensation (300) ayant une forme tridimensionnelle courbe ou semi circulaire.

6. Système selon l'une des revendications 1 à 5, ledit support de culture (31) comprenant un substrat de culture et un dispositif de suspension (33) du substrat de culture, et le réservoir (34) sous-jacent au dispositif de suspension (33), ledit dispositif de suspension étant perméable à l'eau.

7. Système selon l'une des revendications 1 à 6, comprenant en outre un espace d'échange (40) compris entre le dispositif de condensation (300) et la paroi supérieure (20).

8. Système selon la revendication 7, dans lequel l'air extérieur (AE) est libre de circuler dans ledit espace d'échange (40) de sorte qu'une partie de son humidité puisse être condensée au contact du dispositif de condensation (300).

9. Système selon l'une des revendications 1 à 8, dans lequel une partie du flux d'air capté (AC) est orientée vers l'espace de culture (30), soit directement, soit après rafraichissement par le dispositif de condensation (300), soit après réchauffement par la pompe à chaleur (200).

10. Système selon l'une des revendications 1 à 9, comprenant en outre au moins un instrument de mesure parmi un thermomètre et un hygromètre, permettant de déterminer les conditions environnementales au moins dans l'espace de culture (30) et une unité de commande permettant de modifier automatiquement les flux d'air en fonction des paramètres mesurés.

11. Système selon l'une des revendications 1 à 10, ledit système étant modulaire.

12. Système selon l'une des revendications 1 à 11, ledit système comprenant ou étant connecté à un dispositif de production d'énergie renouvelable tel que des panneaux solaires ou une éolienne ou une combinaison des deux.

13. Méthode de gestion de l'eau destinée à une culture au moyen d'un système de culture autonome selon l'une revendications 1 à 12, la méthode comprenant :
- maintenir en circuit fermé l'eau nécessaire à la culture en partie sous forme liquide et en partie sous forme d'humidité dans l'air ambiant (AA),
- condenser au moins une partie de l'humidité de l'air ambiant (AA) au moyen d'un dispositif de condensation (300), et
- collecter l'eau sous forme liquide dans un réservoir (34) sous-jacent aux plantes (P) de la culture.

14. Méthode selon la revendication 13, ledit système de culture comprenant un espace d'échange selon la revendication 7, comprenant en outre une ou plusieurs des étapes parmi :
- collecter l'air extérieur (AE) vers l'espace de culture au niveau des parois latérales (10) tout en limitant ou évitant le passage de l'humidité de l'air ambiant (AA) vers l'extérieur,
- condenser l'air extérieur (AE) contenu dans l'espace d'échange (40) au moyen du dispositif de condensation (300) sans collecter l'air extérieur contenu dans l'espace d'échange (40) vers l'espace de culture (30),
- collecter l'eau du réservoir (34) pour un usage autre que l'agriculture,
- moduler les flux d'air capté (AC) et/ou d'air froid (AF) de sorte à faire varier les proportions d'humidité et d'eau liquide.

## Patentansprüche

1. Autonomes Kultursystem (1), umfassend Seitenwände (10) und Oberwände (20) und:
- einen Kultivierungsraum (30), welcher mindestens einen Kulturträger (31) umfasst, der für den Anbau von Pflanzungen (P) geeignet ist und durch die Reihe von Seitenwänden (10) abgegrenzt wird, und welcher Umgebungsluft (AA) mit angepasster Temperatur und Luftfeuchtigkeit umfasst, welche für das Wachstum der Pflanzungen (P) angepasst ist;
- einen oder mehrere Lufteinlässe, welche auf der Höhe der Seitenwände (10) angeordnet sind und es ermöglichen, die Aussenluft (AE) aufzunehmen, um einen einströmenden eingefangenen Luftstrom (AC) zu erzeugen;
- eine über dem Kultivierungsraum (30) angeordnete Kondensationsvorrichtung (300), in welcher ein Kaltluftstrom (AF) zirkuliert; und
- eine Luft-Luft-Wärmepumpe (200), welche es ermöglicht, aus dem eingefangenen Luftstrom (AC) den Kaltluftstrom (AF) zu erzeugen;
worin der besagte Kulturträger (31) ein Wasserreservoir (34) umfasst, in welchem die Feuchtigkeit der Umgebungsluft (AA) bei Kontakt mit der Kondensationsvorrichtung (300) kondensiert wird und worin die Seitenwände (10) luftdicht sind, um die Feuchtigkeit der Umgebungsluft (AA) im Kultivierungsraum aufrecht zu halten.

2. System gemäss Anspruch 1, worin das besagte Kondensationssystem (300) ein Zufuhrsystem (330) für Kaltluft (AF), welche von der besagten Wärmepumpe (200) kommt, wobei eine Vielzahl von Injektoren (340) das Ausstossen von Kaltluft (AF) in Kontakt mit Umgebungsluft (AA) ermöglichen, und einen Kondensationsförderer (320), an welchem die Feuchtigkeit der Umgebungsluft (AA) kondensieren kann, umfasst.

3. System gemäss Anspruch 2, wobei der Kondensationsförderer (320) mindestens eine Kondensationsoberfläche (321) umfasst, welche in der Nähe der Injektoren (340) angeordnet ist, oder vorzugsweise zwei Kondensationsoberflächen (321, 322) umfasst, welche auf beiden Seiten der Injektoren (340) übereinander liegen und sich zwischen zwei gegenüberliegenden Seitenwänden (10) erstrecken.

4. System gemäss einem der Ansprüche 1 bis 3, wobei die besagte Kondensationsvorrichtung (300) luft- und lichtdurchlässig ist.

5. System gemäss einem der Ansprüche 1 bis 4, wobei die besagte Kondensationsvorrichtung (300) eine gekrümmte oder halbkreisförmige dreidimensionale Form aufweist.

6. System gemäss einem der Ansprüche 1 bis 5, wobei der besagte Kulturträger (31) ein Kultursubstrat und eine Suspensionsvorrichtung (33) des Kultursubstrats sowie ein Reservoir (34), welches unter der Suspensionsvorrichtung (33) liegt, umfasst, wobei die besagte Suspensionsvorrichtung wasserdurchlässig ist.

7. System gemäss einem der Ansprüche 1 bis 6, zudem umfassend einen Austauschraum (40) zwischen der Kondensationsvorrichtung (300) und der oberen Wand (20).

8. System gemäss Anspruch 7, worin die Aussenluft (AE) im Austauschraum (40) frei zirkulieren kann, so dass ein Teil ihrer Feuchtigkeit bei Kontakt mit der Kondensationsvorrichtung (300) kondensiert werden kann.

9. System gemäss einem der Ansprüche 1 bis 8, worin ein Teil des eingefangenen Luftstroms (AC) entweder direkt oder nach Abkühlung durch die Kondensationsvorrichtung (300) oder nach Erwärmung durch die Wärmepumpe (200) in den Kultivierungsraum (30) geleitet wird.

10. System gemäss einem der Ansprüche 1 bis 9, zudem umfassend mindestens ein Messgerät, darunter ein Thermometer und ein Hygrometer, welches es ermöglicht, die Umgebungsbedingungen zumindest im Kultivierungsraum (30) zu bestimmen, und eine Steuereinheit, welche es ermöglicht, die Luftströme entsprechend den gemessenen Parametern automatisch zu ändern.

11. System gemäss einem der Ansprüche 1 bis 10, wobei da besagtes System modular aufgebaut ist.

12. System gemäss einem der Ansprüche 1 bis 11, wobei das besagte System eine Vorrichtung zur Erzeugung erneuerbarer Energie wie etwa Solarpaneele oder eine Windkraftanlage oder eine Kombination aus beiden umfasst oder mit dieser verbunden ist.

13. Verfahren zur Bewirtschaftung des für eine Kultur bestimmten Wassers mittels eines autonomen Kultursystems gemäss einem der Ansprüche 1 bis 12, wobei das Verfahren umfasst:
- das für die Kultur notwendige Wasser teilweise in flüssiger Form und teilweise in Form von Feuchtigkeit in der Umgebungsluft (AA) in einem geschlossenen Kreislauf aufrecht zu erhalten,
- zumindest einen Teil der Feuchtigkeit der Umgebungsluft (AA) mittels einer Kondensationsvorrichtung (300) zu kondensieren, und
- Wasser in flüssiger Form in einem Reservoir (34) zu sammeln, welches unter den Pflanzen (P) der Kultur liegt.

14. Verfahren gemäss Anspruch 13, wobei das besagte Kultursystem einen Austauschraum gemäss Anspruch 7 umfasst, zudem umfassend einen oder mehrere der folgenden Schritte:
- die Aussenluft (AE) zum Kultivierungsraum hin auf Höhe der Seitenwände (10) aufzunehmen und dabei den Feuchtigkeitsdurchtritt der Umgebungsluft (AA) nach aussen zu begrenzen oder zu vermeiden,
- die im Austauschraum (40) enthaltene Aussenluft (AE) mittels der Kondensationsvorrichtung (300) zu kondensieren, ohne die im Austauschraum (40) enthaltene Aussenluft in Richtung Kultivierungsraum (30) aufzunehmen,
- Wasser aus dem Reservoir (34) für andere Zwecke als die Landwirtschaft zu sammeln,
- die Ströme der eingefangenen Luft (AC) und/oder der kalten Luft (AF) zu modulieren, um die Anteile von Feuchtigkeit und flüssigem Wasser zu variieren.

## Claims

1. Autonomous culture system (1) comprising side (10) and top (20) walls and :
- a cultivation space (30) comprising at least one culture support (31) adapted to the culture of plantations (P) and delimited by the set of side walls (10), and comprising ambient air (AA) of temperature and hygrometry adapted to the growth of the plantations (P);
- one or more air inlets arranged at the level of the side walls (10) and enabling outside air (AE) to be collected to produce an incoming flow of collected air (AC);
- a condensation device (300) located above the cultivation space (30) in which a cold air flow (AF) circulates; and
- an air-to-air heat pump (200) for producing the cold air flow (AF) from the captured air flow (AC);
wherein said culture support (31) comprises a water reservoir (34), where the ambient air humidity (AA) is condensed in contact with the condensation device (300) and where the side walls (10) are airtight so as to maintain the ambient air humidity (AA) within the culture space.

2. A system according to claim 1, said condensation system (300) comprising a supply system (330) for cold air (AF) from said heat pump (200), a plurality of injectors (340) for expelling cold air (AF) on contact with ambient air (AA), and a condensation promoter (320) on which humidity from ambient air (AA) can condense.

3. System according to claim 2, the condensation promoter (320) comprising at least one condensation surface (321) arranged in the vicinity of the injectors (340), preferably two condensation surfaces (321, 322) superimposed on either side of the injectors (340), and extending between two opposite side walls (10).

4. System according to one of claims 1 to 3, said condensation device (300) being permeable to air and light.

5. System according to one of claims 1 to 4, said condensation device (300) having a curved or semi-circular three-dimensional shape.

6. System according to one of claims 1 to 5, said culture support (31) comprising a culture substrate and a suspension device (33) for the culture substrate, and the reservoir (34) underlying the suspension device (33), said suspension device being permeable to water.

7. System according to one of claims 1 to 6, further comprising an exchange space (40) between the condensation device (300) and the top wall (20).

8. A system according to claim 7, in which the outside air (AE) is free to circulate in said exchange space (40) so that some of its moisture can be condensed on contact with the condensing device (300).

9. System according to one of claims 1 to 8, in which part of the captured air flow (AC) is directed towards the growing space (30), either directly, or after cooling by the condensation device (300), or after heating by the heat pump (200).

10. A system according to one of claims 1 to 9, further comprising at least one measuring instrument from among a thermometer and a hygrometer, for determining the environmental conditions at least in the culture space (30), and a control unit for automatically modifying the air flows as a function of the measured parameters.

11. System according to one of claims 1 to 10, said system being modular.

12. System according to one of claims 1 to 11, said system comprising or being connected to a renewable energy production device such as solar panels or a wind turbine or a combination of both.

13. Method of managing water for a crop by means of an autonomous culture system according to any one of claims 1 to 12, the method comprising:
- maintaining in a closed circuit the water required for the crop partly in liquid form and partly in the form of moisture in the ambient air (AA),
- condensing at least some of the moisture in the ambient air (AA) by means of a condensation device (300), and
- collect the water in liquid form in a reservoir (34) underlying the crop plants (P).

14. A method according to claim 13, said culture system comprising an exchange space according to claim 7, further comprising one or more of the steps of :
- collecting outside air (AE) to the cultivation space at the side walls (10) while limiting or preventing the passage of moisture from the ambient air (AA) to the outside,
- condensing the outside air (AE) contained in the exchange space (40) by means of the condensing device (300) without collecting the outside air contained in the exchange space (40) towards the cultivation space (30),
- collect water from the reservoir (34) for non-agricultural use,
- modulate the flows of captured air (AC) and/or cold air (AF) so as to vary the proportions of humidity and liquid water.
